(19)

**Europäisches Patentamt**
**European Patent Office**
**Office européen des brevets**

(11) **EP 4 779 360 A1**

(12) **EUROPEAN PATENT APPLICATION**
published in accordance with Art. 153(4) EPC

(43) Date of publication:
**22.07.2026 Bulletin 2026/30**

(21) Application number: **24909913.6**

(22) Date of filing: **28.08.2024**

(51) International Patent Classification (IPC):
***G01V 1/28*** (2006.01)

(52) Cooperative Patent Classification (CPC):
**G01V 1/28**

(86) International application number:
**PCT/CN2024/115200**

(87) International publication number:
**WO 2025/138963 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 CN 202311823949**

(71) Applicants:
• **China National Petroleum Corporation**
  **Beijing 100007 (CN)**
• **BGP Inc., China National Petroleum Corporation**
  **Hebei 072751 (CN)**
• **CNPC Exploration Software Co., Ltd**
  **Beijing 100080 (CN)**

(72) Inventors:
• **LI, Chaolin**
  **Baoding, Hebei 072751 (CN)**
• **LI, Peiming**
  **Baoding, Hebei 072751 (CN)**
• **CHEN, Haifeng**
  **Baoding, Hebei 072751 (CN)**
• **ZHANG, Jianlei**
  **Baoding, Hebei 072751 (CN)**
• **GAO, Jianjun**
  **Beijing 100083 (CN)**
• **CAI, Dongdi**
  **Baoding, Hebei 072751 (CN)**

(74) Representative: **Petraz, Gilberto Luigi et al**
  **GLP S.r.l.**
  **Viale Europa Unita, 171**
  **33100 Udine (IT)**

(54) **THREE-COMPONENT SEISMIC DATA VECTOR ANTI-ALIASING INTERPOLATION RECONSTRUCTION METHOD AND APPARATUS**

(57) The present invention relates to the technical field of seismic exploration. Provided are a three-component seismic data vector anti-aliasing interpolation reconstruction method and an apparatus. The method comprises: representing three-component seismic data in time domain as pure quaternions for vector joint; transforming the pure quaternion data in time-space domain to frequency-space domain to obtain frequency-space domain data; transforming the frequency-space domain data into frequency-wave number domain; in the frequency-wave number domain, using a dip scanning strategy to construct a mask matrix; performing vector anti-aliasing interpolation reconstruction on the frequency-space domain data and the mask matrix, so as to obtain frequency-space domain reconstruction result; and inversely transforming the frequency-space domain reconstruction result to the time-space domain to obtain time domain three-component three-dimensional data anti-aliasing reconstruction result. The present invention can effectively solve the problem of vector anti-aliasing reconstruction for three-component seismic data that contain both irregular and regular missing traces, thus improving the identification accuracy of the effective event.

FIG. 1A

## Description

### Field of the Invention

The present disclosure relates to the technical field of seismic exploration, and in particular, to a vector anti-aliasing interpolation reconstruction method for three-component seismic data, a vector anti-aliasing interpolation reconstruction apparatus for three-component seismic data, and a computer device.

### Background of the Invention

Since acquisition work of seismic data is restricted by obstacles, construction environment, and economic cost, acquired data are sparse or sampled with irregular missing in the spatial direction. For example, onshore seismic acquisition will be affected by obstacles such as mountains, rivers, and urban buildings, making it impossible to acquire data on ideal regular grids. For marine seismic data acquisition, the tower steamer (TC) acquisition will be affected by streamer feathering. The ocean bottom cable (OBC) acquisition will be affected by ocean currents and tides. An ocean bottom node (OBN) seismograph has high acquisition accuracy, but will deviate in placement position due to influence of ocean currents and rugged seabed terrains. In addition, elimination of disused shots and disused traces in an indoor processing stage will also cause seismic trace missing to a certain degree. Interpolation reconstruction of sparse and irregular missing seismic data can effectively improve the migration imaging effect, suppress spatial aliasing and improve accuracy of seismic data interpretation results.

As the oil and gas exploration becomes increasingly difficult, multi-component seismic technology plays an increasingly important role in the exploration of complex oil and gas reservoirs. Compared with the traditional single primary wave exploration, multi-component seismic exploration acquires information of primary waves and shear waves simultaneously, and can effectively reduce the multiplicity of solution of reservoir prediction and improve the accuracy of structural imaging. As a result, the multi-component seismic exploration has obvious advantages in reservoir monitoring, fluid prediction, and lithology identification. By an existing reconstruction method for multi-component seismic data, components are usually reconstructed one by one. This strategy of separate component reconstruction damages a correlation between the components, destroys the structural features and integrity of a seismic wave vector field, and can hardly obtain ideal reconstruction results.

Up to now, OBN multi-wave and multi-component seismic exploration technology has been attracting increasing attention in the field of marine exploration, with extensive popularization and application. Due to restrictions of costs of instruments, OBN exploration has fewer traces for shots, and sparse sampling leads to aliasing interference in the spatial direction, and further affects the quality of subsequent migration imaging. The existing multi-component seismic data reconstruction methods generally lack an anti-aliasing mechanism, cannot implement trace densification interpolation of three-component OBN sparsely sampled data, and cannot jointly reconstruct the multi-component data including regular missing traces. A single-component anti-aliasing reconstruction method cannot be directly applied to interpolation reconstruction of multi-component regular missing data. As a result, it is urgent to develop a vector anti-aliasing interpolation method applicable to multi-component data.

### Summary of the Invention

The present disclosure provides a vector anti-aliasing interpolation reconstruction method and apparatus for three-component seismic data, which can effectively solve the problem of vector anti-aliasing reconstruction of three-component seismic data including both irregular missing traces and regular missing traces.

One aspect of the present disclosure provides a vector anti-aliasing interpolation reconstruction method for three-component seismic data. The vector anti-aliasing interpolation reconstruction method for three-component seismic data includes:

representing the three-component seismic data as a pure quaternion in time domain, and performing vector joint on three-component seismic data by using the pure quaternion;
transforming pure quaternion data in time-space domain to frequency-space domain, to obtain frequency-space domain data;
transforming the frequency-space domain data to frequency-wavenumber domain;
constructing a mask matrix in the frequency-wavenumber domain by using a dip scanning strategy;
performing vector anti-aliasing interpolation reconstruction based on the frequency-space domain data and the mask matrix, to obtain frequency-space domain reconstruction result; and
inversely transforming the frequency-space domain reconstruction result to the time-space domain, to obtain an anti-aliasing reconstruction result of three-component three-dimensional data in the time domain.

In an embodiment of the present disclosure, the transforming pure quaternion data in time-space domain to frequency-space domain includes: performing one-dimensional real quaternion forward Fourier transform on the pure quaternion data along the time variable, thus transforming the pure quaternion data from the time domain to frequency domain, to obtain quaternion frequency-space domain data.

In the embodiment of the present disclosure, the transforming the frequency-space domain data to frequency-wavenumber domain includes: performing two-dimensional real quaternion forward Fourier transform in spatial dimension on the quaternion frequency-space domain data, to obtain quaternion frequency-wavenumber domain data.

In the embodiment of the present disclosure, the constructing a mask matrix in the frequency-wavenumber domain by using a dip scanning strategy includes: performing, by using the dip scanning strategy in the frequency-wavenumber domain, linear scanning from zero wavenumber at different dips, and calculating an energy spectrum corresponding to different dips and negative second derivatives of the energy spectrum; and calculating the mask matrix corresponding to each frequency slice by using a maximum value point of the negative second derivatives of the energy spectrum.

In the embodiment of the present disclosure, an expression of the energy spectrum is as follows:

$$\mathbf{E}(p_x, p_y) = \sum_{n=1}^{N_\omega} | \ddot{Q}^{obs}(\omega_n, k_x = p_x \omega_n - \lfloor p_x \omega_n + 0.5 \rfloor, k_y = p_y \omega_n - \lfloor p_y \omega_n + 0.5 \rfloor) |$$

an expression of the negative second derivatives of the energy spectrum is as follows:

$$\mathbf{E}''(p_x, p_y) = -\frac{1}{2}(\frac{\partial^2 E}{\partial p_x^2} + \frac{\partial^2 E}{\partial p_y^2})$$

wherein, $p_x$ and $p_y$ are slopes of a linear ray in quaternion $\omega$-$k_x$-$k_y$ domain, $\omega_n$, $k_x$ and $k_y$ are a normalized frequency and normalized wavenumbers respectively, and satisfy $0<\omega_n<0.5$, $-0.5<k_x<0.5$, and $-0.5<k_y<0.5$, $\omega$ represents a frequency, n represents a serial number of the frequency slice, $N_\omega$ represents the number of the frequency slices, $\ddot{Q}^{obs}$ represents a Fourier spectrum coefficient value of Quaternion observation data in the frequency-wavenumber domain, and $\lfloor \bullet \rfloor$ represents a floor operator.

In the embodiment of the present disclosure, the constructing a mask matrix in the frequency-wavenumber domain by using a dip scanning strategy further includes: performing expansion and bordering on the mask matrix by using a Gaussian window function, to obtain an updated mask matrix.

In the embodiment of the present disclosure, the calculating the mask matrix corresponding to each frequency slice by using a maximum value point of the negative second derivatives of the energy spectrum includes:

generating a mask matrix $\mathbf{M}(\omega_n, k_x, k_y)$ corresponding to each frequency slice $\omega_n$ by using dip slopes corresponding to first L maximum values of the negative second derivatives of the energy spectrum; wherein,
each of values of elements at dips corresponding to first L maximum energy values in the mask matrix is equal to 1, each of the remaining elements is equal to 0, and an expression for calculating the mask matrix is as follows:

$$\mathbf{M}(\omega_n, k_x = p_{xl}\omega_n - \lfloor p_{xl}\omega_n + 0.5 \rfloor, k_y = p_{yl}\omega_n - \lfloor p_{yl}\omega_n + 0.5 \rfloor) = 1,$$
$$n = 1, 2, ..., N_\omega., l = 1, 2, ..., L \quad;$$

performing expansion and bordering on a range including an element 1 in the mask matrix by using a spatial two-dimensional Gaussian function as a window function, wherein an expression of the spatial two-dimensional Gaussian function $G(x,y)$ is as follows:

$$G(x, y) = e^{-[(\frac{x-N_x}{h_x})^2 + (\frac{y-N_y}{h_y})^2]}, \quad x \in [0, 2N_x], y \in [0, 2N_y]$$

an expression of a bordering window function $W(x,y)$ is as follows:

$$W(x,y) = \begin{cases} G(x,y), x \in [0,N_x), y \in [0,N_y). \\ 1, x \in [N_x, N_x + L_x], y \in [N_y, N_y + L_y]. \\ G(x-L_x, y-L_y), \ x \in (N_x + L_x, 2N_x + L_x], y \in [N_y + L_y, 2N_y + L_y] \end{cases};$$

wherein, $N_x$ and $N_y$ represent a bordering length of the Gaussian window function in the direction $x$ and a bordering length of the Gaussian window function in the direction $y$ respectively, $L_x$ and $L_y$ represent a length of a central part of the window function in the direction $x$ and a length of the central part of the window function in the direction $y$ respectively, $h_x$ and $h_y$ are constants in the Gaussian function, and the greater the constants are, the less a slope rate of a window edge is, and the gentler a slope of the window edge is; and

using $W(x,y)$ to act on the mask matrix $\mathbf{M}(\omega_n, k_x, k_y)$, to perform expansion and bordering on the range including an element 1, where the updated mask matrix is expressed as $\dot{\mathbf{M}}(\omega_n, k_x, k_y)$ with an expression as follows:

$$\dot{\mathbf{M}}(\omega_n, k_x, k_y) = \mathbf{M}(\omega_n, k_x, k_y) * W(x, y).$$

In the embodiment of the present disclosure, the performing vector anti-aliasing interpolation reconstruction based on the frequency-space domain data and the mask matrix includes: reconstructing frequency slice data in the frequency-space domain data by using a vector convex set projection iterative algorithm, and inserting the mask matrix corresponding to the frequency slice into an iterative reconstruction expression at each iteration, to implement the vector anti-aliasing interpolation reconstruction.

In the embodiment of the present disclosure, the reconstructing frequency slice data in the frequency-space domain data by using a vector convex set projection iterative algorithm, and inserting the mask matrix corresponding to the frequency slice into an iterative reconstruction expression at each iteration, to implement the vector anti-aliasing interpolation reconstruction include:

performing, for each piece of frequency slice data of a positive frequency part and a negative frequency part of the frequency-space domain data, the reconstruction by using the vector convex set projection iterative algorithm based on real quaternion Fourier transform, and abbreviating the mask matrix $\dot{\mathbf{M}}(\omega_n, k_x, k_y)$ to $\dot{\mathbf{M}}$ to be inserted into a vector convex set projection iterative reconstruction expression, to suppress spatial aliasing and implement anti-aliasing trace densification interpolation; wherein

an expression of vector anti-aliasing convex set projection iterative interpolation is as follows:

$$\dot{Q}^l = \alpha \dot{Q}^{obs} + (I - \alpha S) . * F_Q^{-L} T^l \dot{\mathbf{M}} F_Q^L \dot{Q}^{l-1}, \ l = 1, 2, ..., N_{iter};$$

$\dot{Q}^l$ represents a reconstruction result of a $l^{th}$ iteration, and $\dot{Q}^{obs}$ represents a result of one-dimensional real quaternion forward Fourier transform of a quaternion $Q^{obs}(t, x, y)$ along the time dimension; and

$I$ represents an all-ones matrix, and $F_Q^L$ and $F_Q^{-L}$ represent spatial two-dimensional real quaternion forward Fourier transform and spatial two-dimensional real quaternion inverse Fourier transform respectively; $T^l$ represents a threshold operator, $S$ represents a sampling operator and has elements 0 and 1, 1 represents a known trace, and 0 represents a missing trace; and $\alpha$ represents a weighting factor configured to control a proportion of original sampling data participating in the reconstruction, to implement anti-aliasing denoising interpolation, $0 < \alpha \le 1$, and $N_{iter}$ represents a maximum number of iterations.

In the embodiment of the present disclosure, the inversely transforming the frequency-space domain reconstruction result to the time-space domain includes: performing one-dimensional real quaternion inverse Fourier transform on the frequency-space domain reconstruction result along the frequency dimension to the time-space domain.

Another aspect of the present disclosure provides a vector anti-aliasing interpolation reconstruction apparatus for three-component seismic data. The vector anti-aliasing interpolation reconstruction apparatus for three-component seismic data includes:

a vector joint module configured to represent the three-component seismic data as a pure quaternion in the time domain, and perform vector joint on three-component seismic data by using the pure quaternion;

a domain transformation module configured to transform pure quaternion data in time-space domain to frequency-space domain, to obtain frequency-space domain data, and transform the frequency-space domain data to frequency-wavenumber domain; and

an anti-aliasing interpolation reconstruction module configured to construct a mask matrix in the frequency-wavenumber domain by using a dip scanning strategy, and perform vector anti-aliasing interpolation reconstruction based on the frequency-space domain data and the mask matrix, to obtain frequency-space domain reconstruction result; where

the domain transformation module is further configured to inversely transform the frequency-space domain reconstruction result to the time-space domain, to obtain an anti-aliasing reconstruction result of three-component three-dimensional data in the time domain.

The present disclosure further provides a computer device. The computer device includes: a memory, a processor, and a computer program, where the computer program is stored in the memory and is configured to be executed by the processor, to implement the vector anti-aliasing interpolation reconstruction method for three-component seismic data described above.

Aiming at the three-component seismic data with the regular missing trace, the present disclosure adopts the vector anti-aliasing convex set projection reconstruction technology based on the real quaternion Fourier transform to perform the trace densification interpolation. In this way, the problem of the vector anti-aliasing reconstruction of three-component seismic data including the irregular missing traces and the regular missing traces can be solved effectively. In addition, based on the dip scanning anti-aliasing strategy, the present disclosure uses the maximum value of the negative second derivatives of the dip scanning energy spectrum to identify and determine dips of an event. Compared with a way in which a maximum value of the dip scanning energy spectrum is used to identify and determine the dips of the event, accuracy of identification of the effective event can be improved.

Other features and advantages of the embodiments of the present disclosure will be described in detail in the following specific implementations.

**Brief Description of Drawings**

Accompanying drawings described herein are used for providing further understanding of the present disclosure and constitute part of the present disclosure. Illustrative embodiments of the present disclosure and their descriptions are used to explain the present disclosure rather than constitute improper limitation to the present disclosure. In the figures:

FIG. 1A is a flowchart of a vector anti-aliasing interpolation reconstruction method for three-component seismic data according to an embodiment of the present disclosure;

FIG. 1B is a flowchart of vector anti-aliasing convex set projection interpolation according to a specific embodiment of the present disclosure;

FIG. 2 is a rectangular bordering window function (a) and its wavenumber spectrum (b) in Fourier domain in an example of the present disclosure;

FIG. 3 is a Gaussian bordering window function (a) and its wavenumber spectrum (b) in Fourier domain in an example of the present disclosure;

FIG. 4 is a normalized wavenumber spectrum (a) of complete data of a component Y and a normalized wavenumber spectrum (b) of regular missing data of the component Y at 20 Hz;

FIG. 5 is a mask matrix (a) constructed through a single-component anti-aliasing technology for component Y data and a normalized wavenumber spectrum (b) of a single-component anti-aliasing interpolation result;

FIG. 6 is a mask matrix (a) constructed through a vector anti-aliasing technology for component Y data and a normalized wavenumber spectrum (b) of a vector anti-aliasing interpolation result;

FIG. 7 is a plane wave dip (a) determined based on a maximum value of an energy spectrum and a plane wave dip (b) determined based on a maximum value of negative second derivatives of the energy spectrum;

FIG. 8 is a slice display of an original three-component ocean bottom node (OBN) common receiver point gather at Crossline=112, in which (a) component X, (b) component Y, and (c) component Z are shown;

FIG. 9 is enlarged display of an original three-component OBN common receiver point gather in a rectangular area, in which (a) component X, (b) component Y, and (c) component Z are shown;

FIG. 10 is enlarged display of three-component seismic data including regular missing traces in a rectangular area, in which component X, (b) component Y, and (c) component Z are shown;

FIG. 11 is partial enlarged display of a single-component anti-aliasing convex set projection reconstruction result, in which component X, (b) component Y, and (c) component Z are shown; and

FIG. 12 is partial enlarged display of a vector anti-aliasing convex set projection reconstruction result, in which component X, (b) component Y, and (c) component Z are shown.

**Detailed Description of the Embodiments**

To make the technical solutions and advantages of the embodiments of the present disclosure clearer, illustrative embodiments of the present disclosure will be further described in detail below in conjunction with the accompanying drawings. Apparently, the described embodiments are some embodiments rather than all embodiments of the present disclosure. It should be noted that embodiments in the present disclosure and features in the embodiments can be combined with one another if there is no conflict.

The existing multi-component seismic data reconstruction methods generally lack an anti-aliasing mechanism, and cannot jointly reconstruct multi-component data with regular missing traces. A single-component anti-aliasing reconstruction method cannot be directly applied to interpolation reconstruction of multi-component regular missing data.

In order to solve the problem, the embodiment of the present disclosure provides a vector anti-aliasing interpolation reconstruction method for three-component seismic data. The vector anti-aliasing interpolation reconstruction method for three-component seismic data includes: the three-component seismic data are represented as a pure quaternion in time domain, and vector joint is performed on three-component seismic data by using the pure quaternion; pure quaternion data in time-space domain are transformed to frequency-space domain, to obtain frequency-space domain data; the frequency-space domain data are transformed to frequency-wavenumber domain; a mask matrix is constructed in the frequency-wavenumber domain by using a dip scanning strategy; vector anti-aliasing interpolation reconstruction is performed based on the frequency-space domain data and the mask matrix to obtain frequency-space domain reconstruction result; and the frequency-space domain reconstruction result is inversely transformed to the time-space domain, to obtain an anti-aliasing reconstruction result of three-component three-dimensional data in the time domain. With a vector anti-aliasing convex set projection reconstruction technology based on the real quaternion Fourier transform, the present disclosure performs vectorization expansion on an existing single-component anti-aliasing convex set projection method. In this way, the problem of vector anti-aliasing reconstruction of three-component seismic data including irregular missing traces and regular missing traces can be solved effectively.

In addition, based on the dip scanning anti-aliasing strategy, the present disclosure uses the maximum value of the negative second derivatives of the dip scanning energy spectrum to identify and determine dips of an event. Compared with a way in which a maximum value of the dip scanning energy spectrum is used to identify and determine the dips of the event, accuracy of identification of the effective event can be improved. By using the Gaussian bordering window function for expansion and bordering on the mask matrix, the phenomenon of Gibbs energy oscillation and tailing at an edge of the event can be alleviated.

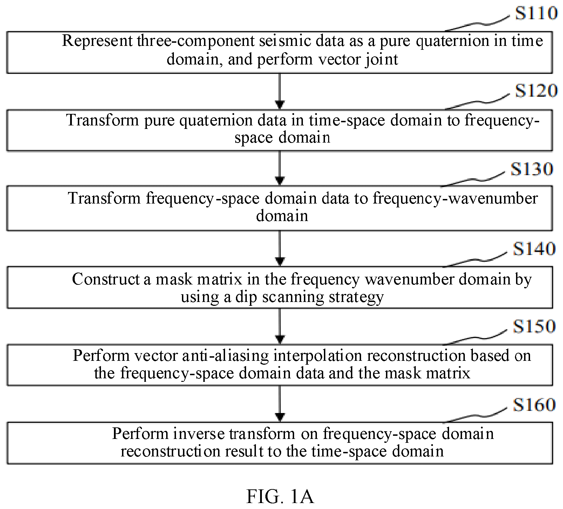

As shown in FIG. 1A, the vector anti-aliasing interpolation reconstruction method for three-component seismic data according to the embodiment of the present disclosure includes:

S110, representing the three-component seismic data as a pure quaternion in time domain, and performing vector joint on three-component seismic data by using the pure quaternion;

S120, transforming pure quaternion data in time-space domain to frequency-space domain, to obtain frequency-space domain data;

S130, transforming the frequency-space domain data to frequency-wavenumber domain;

S140, constructing a mask matrix in the frequency-wavenumber domain by using a dip scanning strategy;

S150, performing vector anti-aliasing interpolation reconstruction based on the frequency-space domain data and the mask matrix, to obtain frequency-space domain reconstruction result; and

S160, inversely transforming the frequency-space domain reconstruction result to the time-space domain, to obtain an anti-aliasing reconstruction result of three-component three-dimensional data in the time domain.

In step S110, the three-dimensional three-component seismic data are represented as the pure quaternion with a real part of 0 in the time domain, and the vector joint of the three-component seismic data is implemented.

In step S120, the one-dimensional real quaternion forward Fourier transform is performed on the pure quaternion data along the time variable, and the pure quaternion data are transformed from the time domain to the frequency domain to obtain the quaternion frequency-space domain data.

In step S130, the two-dimensional real quaternion forward Fourier transform in the spatial dimension is performed on the quaternion frequency-space domain data to obtain the quaternion frequency-wavenumber domain data.

In step S140, linear scanning performed by using the dip scanning strategy in the frequency-wavenumber domain from zero wavenumber at different dips, and an energy spectrum corresponding to different dips and negative second derivatives of the energy spectrum are calculated, and the mask matrix corresponding to each frequency slice is calculated by using a maximum value point of the negative second derivatives of the energy spectrum. Expansion and bordering are performed on the mask matrix by using a Gaussian window function to obtain an updated mask matrix.

In step S150, frequency slice data in the frequency-space domain data are reconstructed by using a vector convex set projection iterative algorithm, and the mask matrix corresponding to the frequency slice is inserted into an iterative reconstruction expression at each iteration, to implement the vector anti-aliasing interpolation reconstruction.

In step S160, the one-dimensional real quaternion inverse Fourier transform is performed on the frequency-space domain reconstruction result along the frequency dimension to the time-space domain, to obtain an anti-aliasing interpolation reconstruction result of three-component three-dimensional data in the time domain.

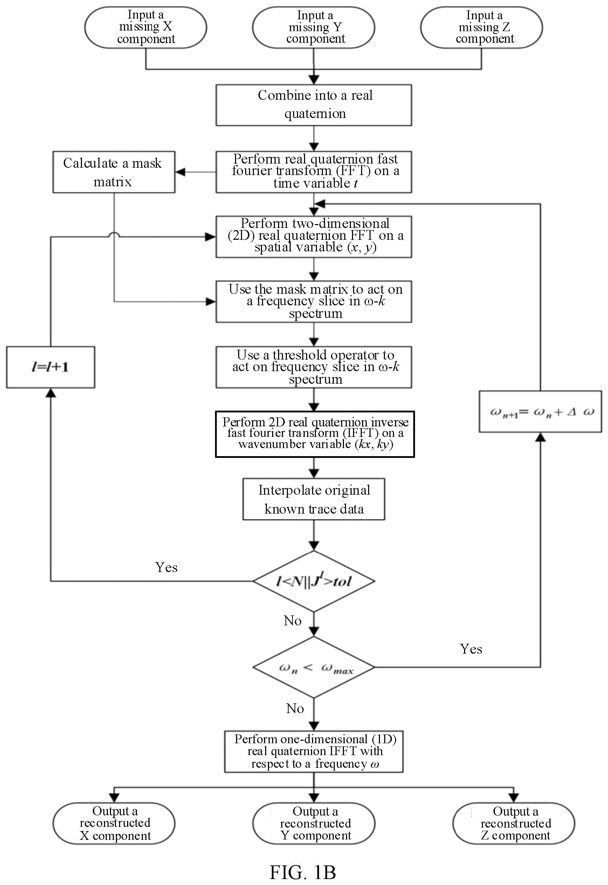

With reference to FIG. 1B, in a specific embodiment, vector anti-aliasing trace densification interpolation is implemented on sparsely sampled data acquired by a three-component three-dimensional common shot point domain gather and a common receiver point domain gather. With the three-component sparsely sampled data in the common receiver point domain as an example, the anti-aliasing reconstruction includes:

(1) $DX^{obs}(t, x, y)$, $DY^{obs}(t, x, y)$ and $DZ^{obs}(t, x, y)$ are set to represent sparsely sampled data corresponding to three components of common receiver point domains X, Y, and Z acquired through OBN exploration. Vector joint representation of the three-component seismic data is implemented by using a real quaternion, to be expressed as a pure quaternion $Q^{obs}(t, x, y)$ with a real part of 0.

$$Q^{obs}(t,x,y) = DX^{obs}(t,x,y)i + DY^{obs}(t,x,y)j + DZ^{obs}(t,x,y)k$$ .

(2) One-dimensional real quaternion forward Fourier transform is performed on the quaternion $Q^{obs}(t, x, y)$ along the time variable $t$, thus $Q^{obs}(t, x, y)$ is transformed from the time domain to quaternion frequency domain and is expressed as $(\omega, x, y)$,

(3) Two-dimensional real quaternion forward Fourier transform is performed on variables $x$ and $y$ of $Q^{obs}(\omega, x, y)$ along the spatial dimension, and $Q^{obs}(\omega, x, y)$ is transformed from the quaternion frequency-space domain to quaternion frequency-wavenumber domain and is expressed as $\ddot{Q}^{obs}(\omega, k_x, k_y)$.

(4) In the quaternion frequency-wavenumber domain, a ray is emitted from zero wavenumber, linear scanning is performed along a slope $p_x$ and a slope $p_y$ of different dips, and an energy spectrum $\mathbf{E}(p_x, p_y)$ $\mathbf{E}''(p_x, p_y)$ are calculated. Expressions for calculating corresponding to different dips and $\mathbf{E}''(p_x, p_y)$ are as follows:

$$\mathbf{E}(p_x, p_y) = \sum_{n=1}^{N_\omega} |\ddot{Q}^{obs}(\omega_n, k_x = p_x\omega_n - \lfloor p_x\omega_n + 0.5 \rfloor, k_y = p_y\omega_n - \lfloor p_y\omega_n + 0.5 \rfloor)|$$

$$\mathbf{E}''(p_x, p_y) = -\frac{1}{2}\left(\frac{\partial^2 E}{\partial p_x^2} + \frac{\partial^2 E}{\partial p_y^2}\right)$$ .

wherein, $p_x$ and $p_y$ are slopes of a linear ray in a quaternion $\omega$-$k_x$-$k_y$ domain, $\omega_n$, $k_x$ and $k_y$ are a normalized frequency and normalized wavenumbers respectively, and satisfy $0 < \omega_n < 0.5$, $-0.5 < k_x < 0.5$, and $-0.5 < k_y < 0.5$, $\omega$ represents a frequency, n represents a serial number of the frequency slices, $N_\omega$ represents the number of the frequency slices, $\ddot{Q}^{obs}$ represents a Fourier spectrum coefficient value of Quaternion observation data in the frequency-wavenumber domain, and $\lfloor \bullet \rfloor$ represents a floor operator.

(5) A mask matrix $\mathbf{M}(\omega_n, k_x, k_y)$ corresponding to each frequency slice $\omega_n$ is generated by using dip slopes corresponding to first L maximum values of the negative second derivatives $\mathbf{E}''(p_x, p_y)$ of the energy spectrum. In this matrix, each of values of elements at dips corresponding to first L maximum energy values in the mask matrix is equal to 1, each of the remaining elements is equal to 0, and an expression for calculating $\mathbf{M}(\omega_n, k_x, k_y)$ is as follows:

$$\mathbf{M}(\omega_n, k_x = p_{xl}\omega_n - \lfloor p_{xl}\omega_n + 0.5 \rfloor, k_y = p_{yl}\omega_n - \lfloor p_{yl}\omega_n + 0.5 \rfloor) = 1,$$

$$n = 1, 2, ..., N_\omega., l = 1, 2, ..., L$$ ;

In order to alleviate the phenomenon of Gibbs energy oscillation and tailing in the event in the anti-aliasing interpolation result caused by expansion on the mask matrix by the rectangular window function, the spatial two-dimensional Gaussian function $G(x,y)$ is used as a window function for expansion and bordering on a range including an element 1 in the mask matrix $\mathbf{M}(\omega_n,k_x,k_y)$. An expression of $G(x,y)$ is as follows:

$$G(x, y) = e^{-[(\frac{x-N_x}{h_x})^2 + (\frac{y-N_y}{h_y})^2]} , \quad x \in [0, 2N_x], y \in [0, 2N_y]$$

An expression of a bordering window function $W(x,y)$ is as follows:

$$W(x, y) = \begin{cases} G(x, y), x \in [0, N_x), y \in [0, N_y). \\ 1, x \in [N_x, N_x + L_x], y \in [N_y, N_y + L_y]. \\ G(x - L_x, y - L_y), \ x \in (N_x + L_x, 2N_x + L_x], y \in [N_y + L_y, 2N_y + L_y] \end{cases}$$

In the expressions, $N_x$ and $N_y$ represent a bordering length of the Gaussian window function in the direction $x$ and a bordering length of the Gaussian window function in the direction $y$ respectively, $L_x$ and $L_y$ represent a length of a central part of the window function in the direction $x$ and a length of the central part of the window function in the direction y respectively, $h_x$ and $h_y$ are constants in the Gaussian function, and the greater the constants are, the less a slope rate of a window edge is, and the gentler a slope of the window edge is.

And $W(x,y)$ is used to act on the mask matrix $\mathbf{M}(\omega_n,k_x,k_y)$, to perform expansion and bordering on the range including an element 1. The updated mask matrix is expressed as $\dot{\mathbf{M}}(\omega_n,k_x,k_y)$ with an expression as follows:

$$\dot{\mathbf{M}}(\omega_n, k_x, k_y) = \mathbf{M}(\omega_n, k_x, k_y) * W(x, y)$$

(6) For each piece of frequency slice data of a positive frequency part and a negative frequency part of $\dot{Q}^{obs}(\omega, x, y)$, the reconstruction is performed by using the vector convex set projection iterative algorithm based on real quaternion Fourier transform, and the mask matrix $\dot{\mathbf{M}}(\omega_n,k_x,k_y)$ is abbreviated to $\dot{\mathbf{M}}$ to be inserted into a vector convex set projection iterative reconstruction expression, to suppress spatial aliasing and implement anti-aliasing trace densification interpolation. An expression of vector anti-aliasing convex set projection iterative interpolation is as follows:

$$\dot{Q}^l = \alpha \dot{Q}^{obs} + (I - \alpha S).* F_Q^{-L} T^l \dot{\mathbf{M}} F_Q^L \dot{Q}^{l-1}, \ l = 1, 2, ..., N_{iter}$$

In the expression, $Q^j$ represents a reconstruction result of a $l^{th}$ iteration, $\dot{Q}^0 = \dot{Q}^{obs}$, and $Q^{obs}$ represents a result of one-dimensional real quaternion forward Fourier transform of a quaternion $Q^{obs}(t, x, y)$ along the time dimension.

$$Q^{obs}(t, x, y) = DX^{obs}(t, x, y)i + DY^{obs}(t, x, y)j + DZ^{obs}(t, x, y)k$$

In the expression, $I$ represents an all-ones matrix, and $F_Q^L$ and $F_Q^{-L}$ represent spatial two-dimensional real quaternion forward Fourier transform and spatial two-dimensional real quaternion inverse Fourier transform respectively.

And $T^l$ represents a threshold operator, and includes linear, exponential, and data-driven models available for selection.

And S represents a sampling operator and has elements 0 and 1, 1 represents a known trace, and 0 represents a missing trace.

And $\alpha$ represents a weighting factor configured to control a proportion of original sampling data participating in the reconstruction, to implement anti-aliasing denoising interpolation, $0 < \alpha \leq 1$, and $N_{iter}$ represents a maximum number of iterations.

(7) One-dimensional real quaternion inverse Fourier transform is performed on a frequency variable $\omega$ in the anti-

aliasing reconstruction result $Q(\omega, x, y)$ to obtain the vector anti-aliasing interpolation result $Q^{recon}(t, x, y)$ in the time domain.

$$Q^{recon}(t,x,y) = DX^{recon}(t,x,y)i + DY^{recon}(t,x,y)j + DZ^{recon}(t,x,y)k$$.

The anti-aliasing interpolation reconstruction results $DX^{recon}(t, x, y)$ , $DY^{recon}(t, x, y)$, and $DZ^{recon}(t, x, y)$ corresponding to the component X, the component Y, and the component Z are obtained above, and final reconstruction is completed.

Aiming at the three-component seismic data with the regular missing traces, the present disclosure adopts the vector anti-aliasing convex set projection reconstruction technology based on the real quaternion Fourier transform to perform the trace densification interpolation. In a first aspect, in the vector reconstruction technology, the mask matrix is constructed by using the dip scanning strategy for suppressing the spatial aliasing. In this way, the anti-aliasing trace densification interpolation of the vector reconstruction technology can be implemented, and the problem that the existing vector reconstruction technology of three-component seismic data cannot implement trace densification interpolation of the three-component sparsely sampled data due to lack of an anti-aliasing mechanism can be solved. In a second aspect, during the dip scanning, the maximum value of the negative second derivatives of the dip scanning energy spectrum is used to identify and determine the dips of the event. Compared with a method by which a maximum value of the energy spectrum is directly used to determine the dips of the event, the dip of the event is estimated more accurately by the present disclosure. In a third aspect, the Gaussian bordering window function is used for expansion and bordering on the mask matrix. Compared with the existing technology of expansion and bordering on the mask matrix by using the rectangular bordering window function, the present disclosure can effectively alleviate and suppress phenomenon of the energy oscillation and tailing at the edge of the event in the reconstruction result, such that a seismic wave field after vector reconstruction is more accurate. In addition, a model and an actual test show that compared with the single-component anti-aliasing convex set projection reconstruction technology, the vector convex set projection reconstruction technology based on the quaternion of the present disclosure has a higher signal-to-noise ratio in the anti-aliasing interpolation of the three-component seismic data, and is advantageous in protection of the weak effective event.

Examples of the vector anti-aliasing interpolation reconstruction method for three-component seismic data of the present disclosure in specific application scenarios are listed to show effects.

Example 1: a two-dimensional Gaussian bordering window function and a rectangular bordering window function are synthesized for spectrum analysis and comparison.

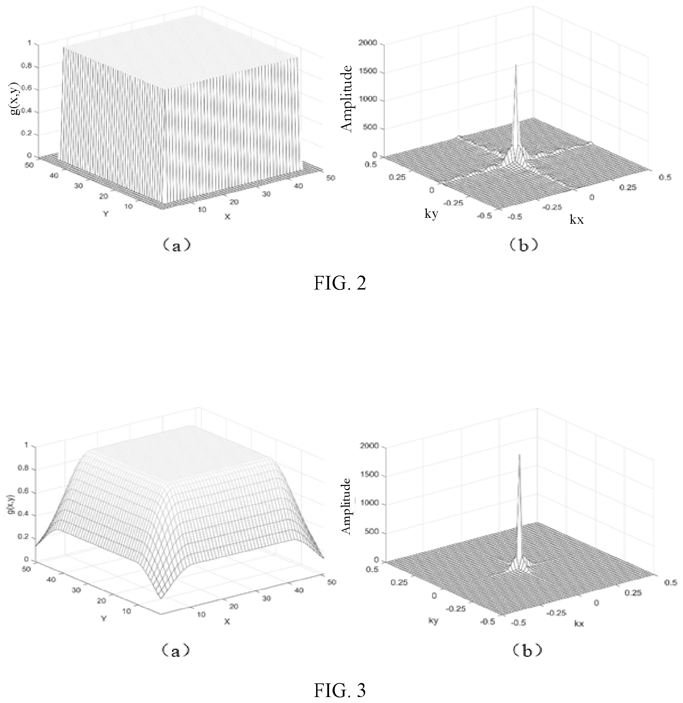

FIG. 2(a) is a rectangular bordering window function used for anti-aliasing interpolation of single-component data at present.

FIG. 2(b) is a spatial two-dimensional Fourier transform wavenumber spectrum of the rectangular bordering window function.

FIG. 3(a) is a Gaussian bordering window function designed by the present disclosure.

FIG. 3(b) is a spatial two-dimensional Fourier transform wavenumber spectrum of the Gaussian bordering window function.

It can be seen from FIG. 2(b) that the rectangular window function has obvious energy oscillation continuation around the central zero wavenumber, while in FIG. 3(b), energy oscillation continuation around the central zero wavenumber of the wavenumber spectrum corresponding to the Gaussian window function of the present disclosure is effectively relieved and suppressed.

Example 2: three-dimensional three-component plane wave model data are synthesized for a vector anti-aliasing trace densification interpolation experiment. Three-component plane wave data with a size of $501 \times 51 \times 51$ are synthesized, and then sparse sampled data with a missing degree of 75% are formed by traces decimation in the Inline direction and the Crossline direction. Then, the trace densification interpolation is performed by using the single-component anti-aliasing convex set projection technology and the vector anti-aliasing convex set projection technology of the present disclosure, and finally a difference between reconstructed data and original data is calculated to obtain reconstruction error data.

By comparing a single-component anti-aliasing reconstruction result and a vector anti-aliasing reconstruction result, it can be seen that both technologies can effectively reconstruct the data with regular missing traces and recover continuity of the event in the spatial direction. However, residual energy of an effective signal in an error profile of the single-component anti-aliasing reconstruction is strong, a trace of energy oscillation continuation at the edge of the event is obvious, and especially, missing traces in the weak effective event in the component Y data is hardly recovered with a great residual. However, in the error profile of the vector anti-aliasing interpolation, residual energy of an effective wave is weak, an error profile is clear, energy oscillation continuation at the edge of the event is weak, and the wake effective event in the component Y is also well recovered.

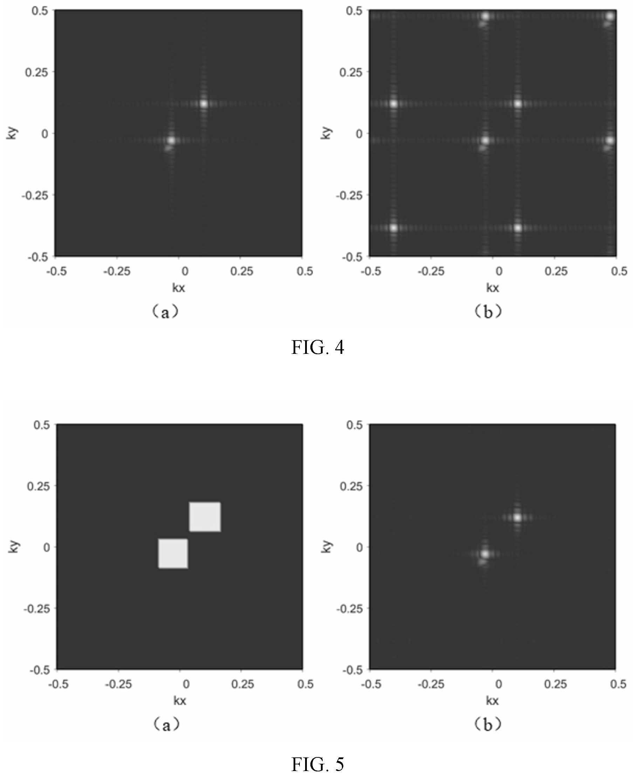

FIG. 4(a) shows a normalized wavenumber spectrum of complete original data of the component Y at a dominant frequency 20 Hz, and FIG. 4(b) shows a normalized wavenumber spectrum of regular missing data of the component Y.

FIG. 5(a) shows the mask matrix constructed by the existing single-component anti-aliasing technology using the dip scanning strategy and the rectangular bordering window function. From the figure, it can be seen that only two rectangular blocks are generated by three plane waves of different slopes, and one rectangular block is missed. FIG. 5(b) shows the normalized wavenumber spectrum of a component Y anti-aliasing interpolation result after spatial aliasing is suppressed by the mask matrix.

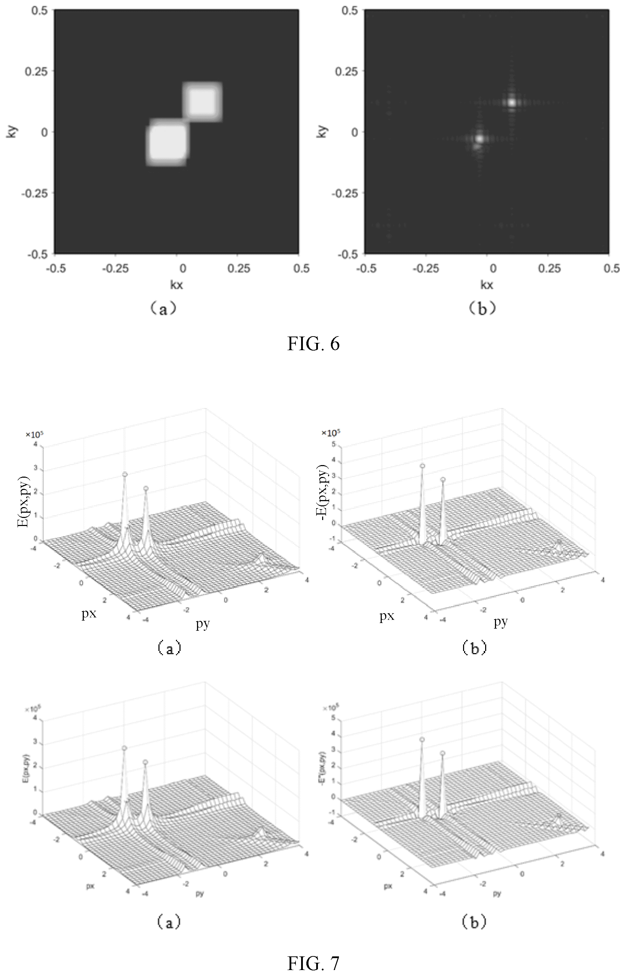

FIG. 6(a) shows the mask matrix constructed by using the dip scanning strategy and the Gaussian bordering window function of the present disclosure. From the figure, it can be seen that three plane waves of different slopes accurately correspond to three Gaussian bordering rectangular blocks. FIG. 6(b) shows the normalized wavenumber spectrum of a component Y anti-aliasing interpolation result after spatial aliasing is suppressed by using the mask matrix constructed by the present disclosure.

FIG. 7(a) shows the plane wave dip determined directly by using the first three maximum values of the energy spectrum. From the figure, it can be seen that the plane wave dips at the dip slopes $p_x$=2.0 and $p_y$=3.0 are missed, and the generated mask matrix is caused to fail to suppress the spatial aliasing thoroughly. FIG. 7(b) shows the plane wave dip determined by using the first three maximum values of the negative second derivatives of the energy spectrum of the present disclosure. It can be seen that the technology of the present disclosure can accurately identify the dip positions corresponding to the three plane waves.

In order to further demonstrate the reconstruction result of the technology of the present disclosure, a reconstruction signal-to-noise ratio (SNR) is defined as:

$$SNR = 10\log_{10} \frac{\left\| D^{true} \right\|_F^2}{\left\| D^{recon} - D^{true} \right\|_F^2} .$$

$D^{recon}$ represents the anti-aliasing interpolation result, and $D^{true}$ represents the true complete original data. The reconstruction signal-to-noise ratios (SNRs) of the three components of the single-component anti-aliasing convex set projection are 11.94 dB, 10.48 dB, and 12.09 dB respectively, and the reconstruction SNRs of the present disclosure are 12.33 dB, 11.83 dB, and 12.34 dB respectively. It can be seen that the vector anti-aliasing convex set projection reconstruction technology is also superior to the single-component anti-aliasing convex set projection reconstruction technology.

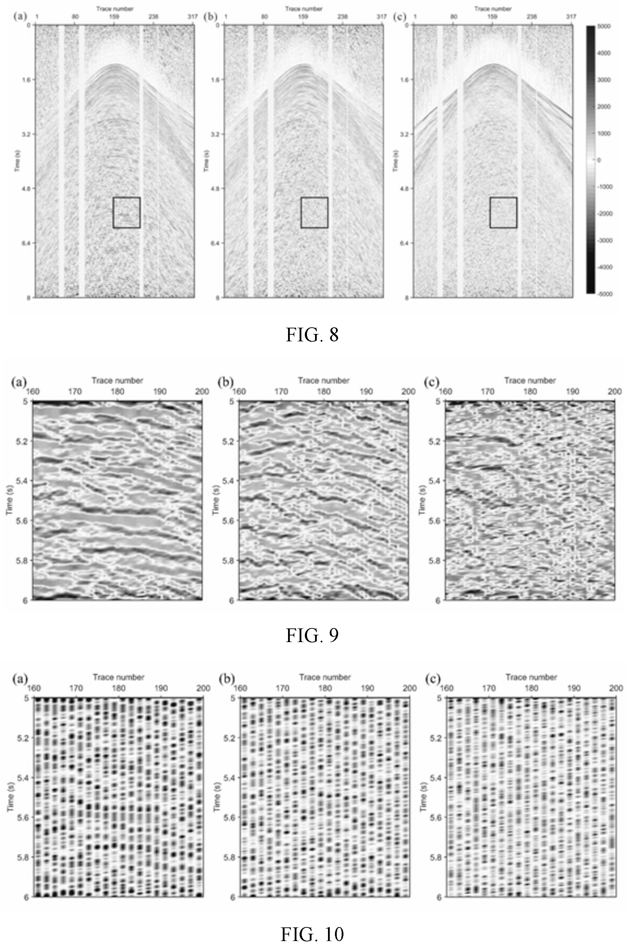

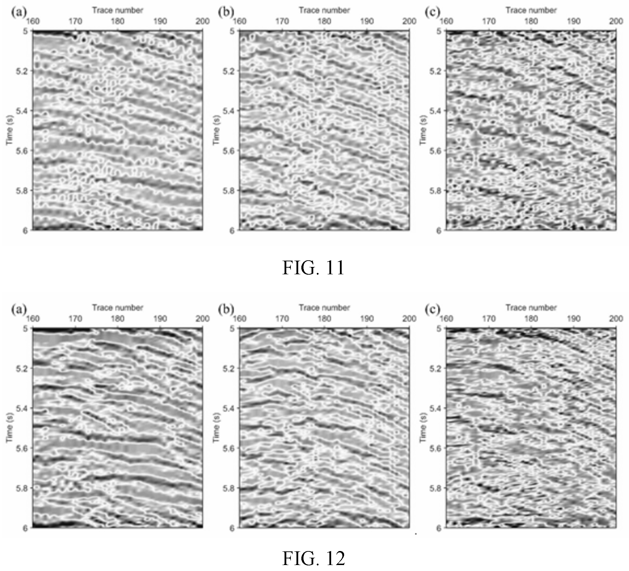

Example 3: the technology of the present disclosure is applied to the anti-aliasing interpolation processing of a block 3C-3D OBN common receiver point gather. Data sizes of a component X, a component Y, and a component Z of an OBN node is 2001×319×320, and true original data slice is shown in FIG. 8. Then, three-component sparsely sampled data including the regular missing traces and few irregular missing traces are formed by performing trace decimation on the three-component original data in the Inline direction and the Crossline direction, and the data missing degree is 78%. Next, the single-component anti-aliasing interpolation technology and the vector anti-aliasing interpolation technology of the present disclosure are used for trace densification interpolation on the sparsely sampled data. In order to show reconstruction results more clearly, data in a black rectangular area in FIG. 8 are selected, enlarged and displayed. FIG. 9 shows the true complete original data of three components. FIG. 10 shows the sparsely sampled data after regular missing. FIG. 11 shows the reconstruction results of the single-component anti-aliasing convex set projection interpolation technology. FIG. 12 shows the vector anti-aliasing interpolation reconstruction result according to the present disclosure. Through comparison of the reconstruction results of FIG. 11 and FIG. 12, it can be seen that the reconstruction result of the present disclosure has continuous and clear events, and obvious wave group features, and spatial structure features of the event well match the true original data of FIG. 9. There are many noise pockmarks in the single-component anti-aliasing reconstruction results, the wave group features of the event are not obvious, and a matching degree with the true original data is poor, thus verifying advancement and superiority of the technology of the present disclosure.

The implementations of the present disclosure further provide a vector anti-aliasing interpolation reconstruction apparatus for three-component seismic data. The vector anti-aliasing interpolation reconstruction apparatus for three-component seismic data includes a vector joint module, a domain transformation module, and an anti-aliasing interpolation reconstruction module. The vector joint module is configured to represent the three-component seismic data as a pure quaternion in time domain and perform vector joint on three-component seismic data by using the pure quaternion. The domain transformation module is configured to transform pure quaternion data in time-space domain to frequency-space domain, to obtain frequency-space domain data and transform the frequency-space domain data to frequency-wavenumber domain. The anti-aliasing interpolation reconstruction module is configured to construct a mask matrix in the frequency-wavenumber domain by using a dip scanning strategy and perform vector anti-aliasing interpolation reconstruction based on the frequency-space domain data and the mask matrix, to obtain frequency-space domain reconstruction result. The domain transformation module is further configured to inversely transform the frequency-space domain reconstruction result to the time-space domain, to obtain an anti-aliasing reconstruction result of three-component three-dimensional data in the time domain.

In an embodiment, the vector joint module represents three-dimensional three-component seismic data as the pure quaternion with a real part of 0 in the time domain, and the vector joint of the three-component seismic data is implemented. The domain transformation module performs one-dimensional real quaternion forward Fourier transform on the pure quaternion data along time variable, transforms the pure quaternion data from the time domain to frequency domain, to obtain quaternion frequency-space domain data, and performs two-dimensional real quaternion forward Fourier transform in spatial dimension on the quaternion frequency-space domain data, to obtain quaternion frequency-wavenumber domain data.

In an embodiment, the anti-aliasing interpolation reconstruction module performs, by using the dip scanning strategy in the frequency-wavenumber domain, linear scanning from zero wavenumber at different dips, calculates an energy spectrum corresponding to different dips and negative second derivatives of the energy spectrum, and calculates the mask matrix corresponding to each frequency slice by using a maximum value point of the negative second derivatives of the energy spectrum. Further, expansion and bordering are performed on the mask matrix by using a Gaussian window function, to obtain an updated mask matrix. Vector anti-aliasing interpolation reconstruction is performed based on the frequency-space domain data and the updated mask matrix, to obtain frequency-space domain reconstruction result.

The vector anti-aliasing interpolation reconstruction apparatus for three-component seismic data corresponds to the vector anti-aliasing interpolation reconstruction method for three-component seismic data described above, and reference can be made to the method embodiment described above for specific details.

The implementations of the present disclosure further provide a computer device. The computer device includes a memory and a processor. The memory stores a computer program, and the processor is configured to execute the computer program, to implement the vector anti-aliasing interpolation reconstruction method for three-component seismic data described above.

The implementations of the present disclosure further provide a computer program product. The computer program product implements the vector anti-aliasing interpolation reconstruction method for three-component seismic data described above when executed by a processor.

The implementations of the present disclosure further provide a machine-readable storage medium. The machine-readable storage medium stores a computer program instruction. The computer program instruction implements the vector anti-aliasing interpolation reconstruction method for three-component seismic data described above when executed by a processor.

Those of ordinary skill in the art should understand that the embodiments of the present disclosure may be provided as a method, a system, or a computer program product. Thus, the present disclosure may take the form of an entire hardware embodiment, an entire software embodiment, or an embodiment combining software and hardware. Moreover, the present disclosure may take the form of a computer program product implemented on one or more computer usable storage media (including but not limited to disk memories, compact disc read-only memories (CD-ROMs), and optical memories) including computer usable program codes. The solution in the embodiment of the present disclosure may be implemented with various computer languages, such as object-oriented programming language Java and interpreted scripting language JavaScript.

The present disclosure is described with reference to the flowcharts and/or block diagrams of the method, the device (system), and the computer program product according to the embodiments of the present disclosure. It should be understood that each flow and/or block in the flowchart and/or block diagram and a combination of the flow and/or block in the flowchart and/or block diagram may be implemented through computer program instructions. These computer program instructions may be provided for a processor of a general-purpose computer, a special-purpose computer, an embedded processing machine, or another programmable data processing device to produce a machine, such that instructions executed by the processor of the computer or another programmable data processing device generate an apparatus configured to implement a function or functions specified in one or more flows of the flowchart and/or one or more blocks of the block diagram.

These computer program instructions may also be stored in a computer-readable memory that may guide the computer or another programmable data processing device to operate in a specific mode, such that the instructions stored in the computer-readable memory produce an article of manufacture including an instruction apparatus, and the instruction apparatus implements the function or functions specified in one or more flows of the flowchart and/or one or more blocks in the block diagram.

These computer program instructions may further be loaded onto the computer or another programmable data processing device, such that a series of operation steps are performed on the computer or another programmable device to generate computer-implemented processing, and the instructions executed on the computer or another programmable device provide steps for implementing the function or functions specified in the one or more flows of the flowchart and/or one or more blocks in the block diagram.

Although preferred embodiments of the present disclosure have been described, those of ordinary skill in the art can make additional changes and modifications to these embodiments once they learn the basic inventive concept. Thus, the appended claims are intended to be constructed as including the preferred embodiments and all changes and modifications falling within the scope of the present disclosure. Apparently, those of ordinary skill in the art can make various modifications and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

**Claims**

1. A vector anti-aliasing interpolation reconstruction method for three-component seismic data, **characterized in that** the method comprises:

   representing the three-component seismic data as a pure quaternion in time domain, and performing vector joint on the three-component seismic data by using the pure quaternion;
   transforming pure quaternion data in time-space domain to frequency-space domain, to obtain frequency-space domain data;
   transforming the frequency-space domain data to frequency-wavenumber domain;
   constructing a mask matrix in the frequency-wavenumber domain by using a dip scanning strategy;
   performing vector anti-aliasing interpolation reconstruction based on the frequency-space domain data and the mask matrix, to obtain frequency-space domain reconstruction result; and
   inversely transforming the frequency-space domain reconstruction result to the time-space domain, to obtain an anti-aliasing reconstruction result of three-component three-dimensional data in the time domain.

2. The vector anti-aliasing interpolation reconstruction method for three-component seismic data according to claim 1, wherein the transforming pure quaternion data in time-space domain to frequency-space domain comprises:
   performing one-dimensional real quaternion forward Fourier transform on the pure quaternion data along time variable, and transforming the pure quaternion data from the time domain to frequency domain, to obtain quaternion frequency-space domain data.

3. The vector anti-aliasing interpolation reconstruction method for three-component seismic data according to claim 2, wherein the transforming the frequency-space domain data to frequency-wavenumber domain comprises:
   performing two-dimensional real quaternion forward Fourier transform in spatial dimension on the quaternion frequency-space domain data, to obtain quaternion frequency-wavenumber domain data.

4. The vector anti-aliasing interpolation reconstruction method for three-component seismic data according to claim 1, wherein the constructing a mask matrix in the frequency-wavenumber domain by using a dip scanning strategy comprises:

   performing, by using the dip scanning strategy in the frequency-wavenumber domain, linear scanning from zero wavenumber at different dips, and calculating an energy spectrum corresponding to different dips and negative second derivatives of the energy spectrum; and
   calculating the mask matrix corresponding to each frequency slice by using a maximum value point of the negative second derivatives of the energy spectrum.

5. The vector anti-aliasing interpolation reconstruction method for three-component seismic data according to claim 4, wherein an expression of the energy spectrum is as follows:

$$\mathbf{E}(p_x, p_y) = \sum_{n=1}^{N_\omega} | \ddot{Q}^{obs} (\omega_n, k_x = p_x \omega_n - \lfloor p_x \omega_n + 0.5 \rfloor, k_y = p_y \omega_n - \lfloor p_y \omega_n + 0.5 \rfloor) | \; ;$$

an expression of the negative second derivative of the energy spectrum is as follows:

$$\mathbf{E}''(p_x, p_y) = -\frac{1}{2}\left(\frac{\partial^2 E}{\partial p_x^2} + \frac{\partial^2 E}{\partial p_y^2}\right)$$ ;

wherein, $p_x$ and $p_y$ are slopes of a linear ray in quaternion $\omega$-$k_x$-$k_y$ domain, $\omega_n$, $k_x$ and $k_y$ are a normalized frequency and normalized wavenumbers respectively, and satisfy $0 < \omega_n < 0.5$, $-0.5 < k_x < 0.5$, and $-0.5 < ky < 0.5$, $\omega$ represents frequency, n represents a serial number of the frequency slices, $N_\omega$ represents the number of the frequency slices, $\ddot{Q}^{obs}$ represents a Fourier spectrum coefficient value of Quaternion observation data in the frequency-wave-number domain, and $\lfloor \bullet \rfloor$ represents a floor operator.

6. The vector anti-aliasing interpolation reconstruction method for three-component seismic data according to claim 4, wherein the constructing a mask matrix in the frequency-wavenumber domain by using a dip scanning strategy further comprises:
performing expansion and bordering on the mask matrix by using a Gaussian window function, to obtain an updated mask matrix.

7. The vector anti-aliasing interpolation reconstruction method for three-component seismic data according to claim 6, wherein the calculating the mask matrix corresponding to each frequency slice by using a maximum value point of the negative second derivative of the energy spectrum comprises:

generating a mask matrix $\mathbf{M}(\omega_n, k_x, k_y)$ corresponding to each frequency slice $\omega_n$ by using dip slopes corresponding to first L maximum values of the negative second derivative of the energy spectrum; wherein each of values of elements at dips corresponding to first L maximum energy values in the mask matrix is equal to 1, each of the remaining elements is equal to 0, and an expression for calculating the mask matrix is as follows:

$$\mathbf{M}(\omega_n, k_x = p_{xl}\omega_n - \lfloor p_{xl}\omega_n + 0.5 \rfloor, k_y = p_{yl}\omega_n - \lfloor p_{yl}\omega_n + 0.5 \rfloor) = 1,$$
$$n = 1, 2, ..., N_\omega., l = 1, 2, ..., L$$ ;

performing expansion and bordering on a range comprising an element 1 in the mask matrix by using a spatial two-dimensional Gaussian function as a window function, wherein an expression of the spatial two-dimensional Gaussian function $G(x,y)$ is as follows:

$$G(x, y) = e^{-[(\frac{x-N_x}{h_x})^2 + (\frac{y-N_y}{h_y})^2]}, \ x \in [0, 2N_x], y \in [0, 2N_y]$$ ;

an expression of a bordering window function $W(x,y)$ is as follows:

$$W(x, y) = \begin{cases} G(x, y), x \in [0, N_x), y \in [0, N_y). \\ 1, x \in [N_x, N_x + L_x], y \in [N_y, N_y + L_y]. \\ G(x - L_x, y - L_y), x \in (N_x + L_x, 2N_x + L_x], y \in [N_y + L_y, 2N_y + L_y] \end{cases}$$ ;

in the expressions, $N_x$ and $N_y$ represent a bordering length of the Gaussian window function in the direction $x$ and a bordering length of the Gaussian window function in the direction $y$ respectively, $L_x$ and $L_y$ represent a length of a central part of the window function in the direction $x$ and a length of the central part of the window function in the direction y respectively, and $h_x$ and $h_y$ are constants in the Gaussian function; and
using $W(x,y)$ to act on the mask matrix $\mathbf{M}(\omega_n, k_x, k_y)$, to perform expansion and bordering on the range comprising an element 1, wherein the updated mask matrix is expressed as $\dot{\mathbf{M}}(\omega_n, k_x, k_y)$ with an expression as follows:

$$\dot{\mathbf{M}}(\omega_n, k_x, k_y) = \mathbf{M}(\omega_n, k_x, k_y) * W(x, y)$$

.

8. The vector anti-aliasing interpolation reconstruction method for three-component seismic data according to claim 4, wherein the performing vector anti-aliasing interpolation reconstruction based on the frequency-space domain data and the mask matrix comprises:
reconstructing frequency slice data in the frequency-space domain data by using a vector convex set projection iterative algorithm, and inserting the mask matrix corresponding to the frequency slice into an iterative reconstruction expression at each iteration, to implement the vector anti-aliasing interpolation reconstruction.

9. The vector anti-aliasing interpolation reconstruction method for three-component seismic data according to claim 8, wherein the reconstructing frequency slice data in the frequency-space domain data by using a vector convex set projection iterative algorithm, and inserting the mask matrix corresponding to the frequency slice into an iterative reconstruction expression at each iteration, to implement the vector anti-aliasing interpolation reconstruction comprise:

performing, for each piece of frequency slice data of a positive frequency part and a negative frequency part of the frequency-space domain data, the reconstruction by using the vector convex set projection iterative algorithm based on real quaternion Fourier transform, and abbreviating the mask matrix $\dot{\mathbf{M}}(\omega_n, k_x, k_y)$ to $\dot{\mathbf{M}}$ to be inserted into a vector convex set projection iterative reconstruction expression, to suppress spatial aliasing and implement anti-aliasing trace densification interpolation; wherein
an expression of vector anti-aliasing convex set projection iterative interpolation is as follows:

$$\dot{Q}^l = \alpha \dot{Q}^{obs} + (I - \alpha S) .* F_Q^{-L} T^l \dot{\mathbf{M}} F_Q^L \dot{Q}^{l-1}, \; l = 1, 2, \ldots, N_{iter};$$

$\dot{Q}^l$ represents a reconstruction result of $l$th iteration, and $\dot{Q}^{obs}$ represents a result of one-dimensional real quaternion forward Fourier transform of a quaternion $Q^{obs}(t, x, y)$ along time dimension;

$I$ represents an all-ones matrix, and $F_Q^L$ and $F_Q^{-L}$ represent spatial two-dimensional real quaternion forward Fourier transform and spatial two-dimensional real quaternion inverse Fourier transform respectively;
$T^l$ represents a threshold operator, $S$ represents a sampling operator and has elements 0 and 1, 1 represents a known trace, and 0 represents a missing trace; and
$\alpha$ represents a weighting factor configured to control a proportion of original sampling data participating in the reconstruction, to implement anti-aliasing denoising interpolation, $0 < \alpha \leq 1$, and $N_{iter}$ represents a maximum number of iterations.

10. The vector anti-aliasing interpolation reconstruction method for three-component seismic data according to claim 1, wherein the inversely transforming the frequency-space domain reconstruction result to the time-space domain comprises:
performing one-dimensional real quaternion inverse Fourier transform on the frequency-space domain reconstruction result along frequency dimension to the time-space domain.

11. A vector anti-aliasing interpolation reconstruction apparatus for three-component seismic data, **characterized in that** the apparatus comprises:

a vector joint module configured to represent the three-component seismic data as a pure quaternion in time domain, and perform vector joint on three-component seismic data by using the pure quaternion;
a domain transformation module configured to transform pure quaternion data in time-space domain to frequency-space domain, to obtain frequency-space domain data, and transform the frequency-space domain data to frequency-wavenumber domain; and
an anti-aliasing interpolation reconstruction module configured to construct a mask matrix in the frequency-wavenumber domain by using a dip scanning strategy, and perform vector anti-aliasing interpolation reconstruction based on the frequency-space domain data and the mask matrix, to obtain frequency-space domain reconstruction result; wherein
the domain transformation module is further configured to inversely transform the frequency-space domain reconstruction result to the time-space domain, to obtain an anti-aliasing reconstruction result of three-component three-dimensional data in the time domain.

12. The vector anti-aliasing interpolation reconstruction apparatus for three-component seismic data according to claim 11, wherein the domain transformation module is specifically configured to perform one-dimensional real quaternion forward Fourier transform on the pure quaternion data along time variable, transform the pure quaternion data from the time domain to frequency domain, to obtain quaternion frequency-space domain data, and perform two-dimensional real quaternion forward Fourier transform in spatial dimension on the quaternion frequency-space domain data, to obtain quaternion frequency-wavenumber domain data.

13. The vector anti-aliasing interpolation reconstruction apparatus for three-component seismic data according to claim 11, wherein the anti-aliasing interpolation reconstruction module is specifically configured to perform, by using the dip scanning strategy in the frequency-wavenumber domain, linear scanning from zero wavenumber at different dips, calculate an energy spectrum corresponding to different dips and a negative second derivative of the energy spectrum, calculate the mask matrix corresponding to each frequency slice by using a maximum value point of the negative second derivative of the energy spectrum, and perform the vector anti-aliasing interpolation reconstruction based on the frequency-space domain data and the mask matrix, to obtain the frequency-space domain reconstruction result.

14. A computer device, comprising:

    a memory storing a computer program; and
    a processor configured to execute the computer program, to implement the vector anti-aliasing interpolation reconstruction method for three-component seismic data according to any one of claims 1 to 10.

15. A computer program product, comprising a computer program, wherein the computer program implements the vector anti-aliasing interpolation reconstruction method for three-component seismic data according to any one of claims 1 to 10 when executed by a processor.

**S110**
Represent three-component seismic data as a pure quaternion in time domain, and perform vector joint

**S120**
Transform pure quaternion data in time-space domain to frequency-space domain

**S130**
Transform frequency-space domain data to frequency-wavenumber domain

**S140**
Construct a mask matrix in the frequency wavenumber domain by using a dip scanning strategy

**S150**
Perform vector anti-aliasing interpolation reconstruction based on the frequency-space domain data and the mask matrix

**S160**
Perform inverse transform on frequency-space domain reconstruction result to the time-space domain

FIG. 1A

FIG. 1B

FIG. 2

FIG. 3

FIG. 4

FIG. 5

FIG. 6

FIG. 7

FIG. 8

FIG. 9

FIG. 10

FIG. 11

FIG. 12

## INTERNATIONAL SEARCH REPORT

| International application No. |
| --- |
| **PCT/CN2024/115200** |

### A. CLASSIFICATION OF SUBJECT MATTER

G01V 1/28(2006.01)i

According to International Patent Classification (IPC) or to both national classification and IPC

### B. FIELDS SEARCHED

Minimum documentation searched (classification system followed by classification symbols)

IPC: G01V

Documentation searched other than minimum documentation to the extent that such documents are included in the fields searched

Electronic data base consulted during the international search (name of data base and, where practicable, search terms used)

CNABS, CNTXT, WPABS, DWPI, ENTXTC, CJFD: 中国石油, 中国地质大学, 地震, 三分量, 多分量, 四分量, 矢量, 插值, 假频, 四元数, 纯四元数, 重构, 重建, 频率, 域, 傅里叶, 傅立叶, 倾角, 扫描, 蒙版矩阵, 蒙板矩阵, multi-component, three-component, quaternion, seismic, frequency, FTP, angle, reconstruction, scan

### C. DOCUMENTS CONSIDERED TO BE RELEVANT

| Category* | Citation of document, with indication, where appropriate, of the relevant passages | Relevant to claim No. |
| --- | --- | --- |
| A | CN 114509805 A (CHINA UNIVERSITY OF GEOSCIENCES (BEIJING)) 17 May 2022 (2022-05-17) <br> description, paragraphs 38-135 | 1-15 |
| A | 李远芳等 (LI, Yuanfang et al.). "四元数在多分量地震数据处理中的应用研究现状 (Research Status of the Application of Quaternion in Multi-Component Seismic Processing)" 石油物探 (Geophysical Prospecting for Petroleum), Vol. 60, No. 1, 31 January 2021 (2021-01-31), <br> pages 70-80 | 1-15 |
| A | CN 107121701 A (JILIN UNIVERSITY) 01 September 2017 (2017-09-01) <br> entire document | 1-15 |
| A | CN 109164483 A (INSTITUTE OF GEOCHEMISTRY, CHINESE ACADEMY OF SCIENCES) 08 January 2019 (2019-01-08) <br> entire document | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 October 2024** | **01 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/115200** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 114428350 A (CHINA PETROLEUM & CHEMICAL CORP. et al.) 03 May 2022 (2022-05-03)<br>entire document | 1-15 |
| A | US 2009292476 A1 (ABMA, Raymond L.) 26 November 2009 (2009-11-26)<br>entire document | 1-15 |

Form PCT/ISA/210 (second sheet) (July 2022)

## INTERNATIONAL SEARCH REPORT
### Information on patent family members

| International application No. |
| --- |
| **PCT/CN2024/115200** |

| Patent document cited in search report | | | Publication date (day/month/year) | Patent family member(s) | | | Publication date (day/month/year) |
| --- | --- | --- | --- | --- | --- | --- | --- |
| CN | 114509805 | A | 17 May 2022 | None | | | |
| CN | 107121701 | A | 01 September 2017 | None | | | |
| CN | 109164483 | A | 08 January 2019 | US | 2021003726 | A1 | 07 January 2021 |
| | | | | US | 11467298 | B2 | 11 October 2022 |
| | | | | WO | 2020042370 | A1 | 05 March 2020 |
| CN | 114428350 | A | 03 May 2022 | None | | | |
| US | 2009292476 | A1 | 26 November 2009 | GB | 2460175 | A | 25 November 2009 |
| | | | | GB | 2460175 | B | 20 June 2012 |
| | | | | US | 8103453 | B2 | 24 January 2012 |

Form PCT/ISA/210 (patent family annex) (July 2022)